# EUROPEAN PATENT APPLICATION

(11) **EP 4 632 658 A1**
(43) Date of publication of application: **15.10.2025**
(21) Application number: 25169393.3
(22) Date of filing: 09.04.2025
(51) Int. Cl.: G06Q 30/0242, G06Q 30/0251

(54) **AUDIENCE MATCHING AND PRE-VERIFICATION**

(30) Priority: 09.04.2024 US 202463631940 P; 08.04.2025 US 202519173752
(71) Applicant: VideoAmp, Inc., Los Angeles, CA 90094 (US)
(72) Inventor: HUDGINS, Joshua Curtis, CA, 90094 (US); NUMMERDOR, Peter Alex, CA, 90094 (US); BOHM, Jonathan Josef, CA, 90094 (US); FASHING, Mark Alois, CA, 90094 (US); NASR, Ramzi Joseph, CA, 90094 (US); ASASI, Hamed, CA, 90094 (US); SHAHIDI, Abtin, CA, 90094 (US); MOHSENINIA, Razieh, CA, 90094 (US); LYSEN, Shaun Micah, CA, 90094 (US); MOHAMMADAGHAEI, Amir, CA, 90094 (US); KOEHLER, James Robert, CA, 90094 (US)
(74) Representative: HGF

(57) **Abstract**

A method may include obtaining a target audience for an advertising campaign. The target audience may include one or more audience identifiers. The method may also include storing the one or more audience identifiers in a privacy protection environment. The method may further include matching the one or more audience identifiers to an identity graph associated with a targetable universe of consumers to obtain at least one advertising target. The method may also include directing at least one advertisement of the advertising campaign to be provided to the at least one advertising target. The method may further include obtaining impression results associated with the advertising campaign relative to the at least one advertising target.

## Description

### CROSS REFERENCE TO RELATED APPLICATIONS

This U.S. Patent Application claims priority to U.S. Provisional Patent Application No. 63/631,940, titled "AUDIENCE MATCHING AND PRE-VERIFICATION," and filed on April 9, 2024, the disclosure of which is hereby incorporated by reference in its entirety.

### TECHNICAL FIELD

This disclosure relates to audience matching for advertisement targeting, and more specifically, to pre-verification of digital advertising targets using a privacy protected environment, such as a cleanroom.

### BACKGROUND

Unless otherwise indicated herein, the materials described herein are not prior art to the claims in the present application and are not admitted to be prior art by inclusion in this section.

Digital advertising includes providing advertisements from advertising entities and/or digital publishers to consumers. In some instances, the advertisements may have varying amounts of effectiveness, which may be based on individual consumers. For example, an advertisement for an automobile may be more effective for a first consumer actively pursuing a new automobile and may be less effective for a second consumer who may have recently purchased a new automobile.

In some instances, electronic advertising campaigns may be executed (e.g., over a network) without consideration to the potential audience as determining and/or targeting specific consumers may be unavailable. Such a distribution of digital advertisements may be expensive and/or cost-inefficient, such as in instances in which the desired target audience is significantly less than a targetable universe of consumers. For example, providing advertisements to all consumers when only a subset of the consumers may be interested may result in a less effective advertising campaign and/or lost value in terms of advertising dollars spent with limited likelihood of a desired outcome (e.g., generating interest in a product, a future purchase of the product, etc.). Moreover, electronic resources (e.g., compute, storage, network, etc.) may be wasted or used ineffectively with inaccurate electronic advertising campaigns.

The subject matter claimed in the present disclosure is not limited to implementations that solve any disadvantages or that operate only in environments such as those described above. Rather, this background is only provided to illustrate one example technology area where some implementations described in the present disclosure may be practiced.

### SUMMARY

In an example embodiment, a method may include obtaining a desired target audience for an advertising campaign. The desired target audience may include one or more audience identifiers. The method may also include storing the one or more audience identifiers in a privacy protection environment. The method may further include matching the one or more audience identifiers to an identity graph that may be associated with a targetable universe of consumers to obtain at least one advertising target. The method may also include directing at least one advertisement of the advertising campaign to be provided to the at least one advertising target. The method may further include obtaining impression results associated with the advertising campaign relative to the at least one advertising target.

In another embodiment, a system may include a privacy protection environment and a data platform. The data platform may be operable to obtain a desired target audience for an advertising campaign. The desired target audience may include one or more audience identifiers. The data platform may also be operable to store the one or more audience identifiers in the privacy protection environment. The data platform may further be operable to match the one or more audience identifiers to an identity graph that may be associated with a targetable universe of consumers to obtain at least one advertising target. The data platform may also be operable to direct at least one advertisement of the advertising campaign to be provided to the at least one advertising target. The data platform may further be operable to obtain impression results associated with the advertising campaign relative to the at least one advertising target.

The objects and advantages of the embodiments will be realized and achieved at least by the elements, features, and combinations particularly pointed out in the claims.

Both the foregoing general description and the following detailed description are given as examples and are explanatory and not restrictive of the invention, as claimed.

### DESCRIPTION OF DRAWINGS

Example implementations will be described and explained with additional specificity and detail using the accompanying drawings in which:
FIG. 1 illustrates a block diagram of an example system for audience matching;
FIG. 2 illustrates an example identity graph;
FIG. 3 illustrates a block diagram of an example audience matching;
FIG. 4 illustrates a flowchart of an example method of audience matching; and
FIG. 5 illustrates an example computing device.

### DETAILED DESCRIPTION

Some digital advertisers attempt to serve advertisements to a particular group of consumers/potential consumers, or a target audience, such as those more likely to be interested in the advertisement relative to others. In many instances, identifying the target audience for the advertisements may be difficult, as data associated with the target audience may be difficult to acquire, the data may be sensitive and/or private, and/or various entities that may obtain the data may be hesitant to share the data with one another or other requesting entities.

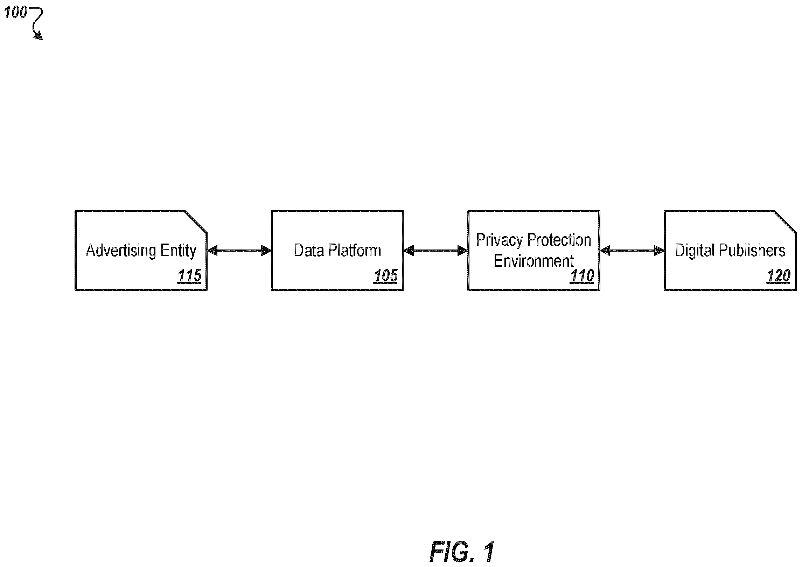

FIG. 1 illustrates a block diagram of an example system 100 for audience matching. The system 100 may include a data platform 105 and a privacy protection environment 110. In some instances, the system 100 may be operable to pre-verify digital advertising targets included in the privacy protection environment 110 for advertisement targeting. The pre-verification may be directed to providing advertisements to a target group of consumers, as determined by an advertising entity 115. The pre-verification may include determining one or more particular consumers to send advertisements to prior to beginning an advertising campaign of the advertising entity 115.

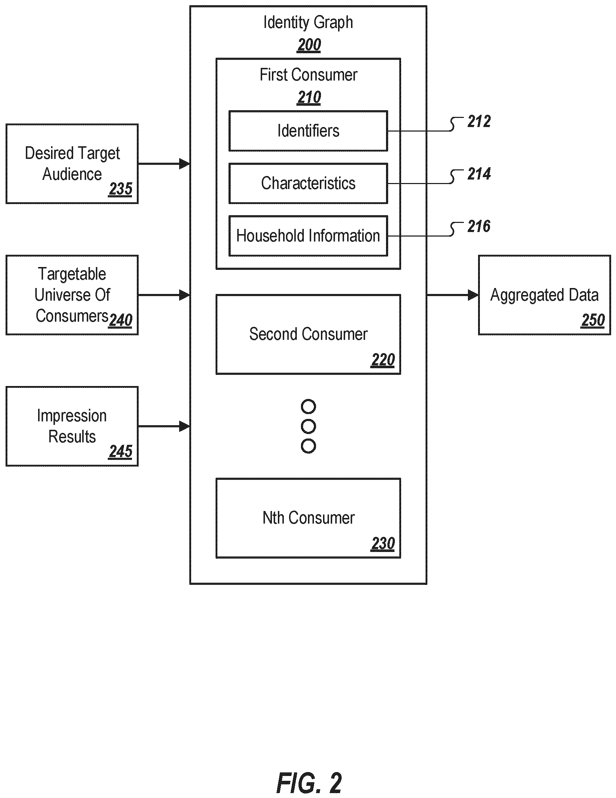

For example, a desired target group may be identified by the advertising entity 115 and the desired target group may be obtained by the data platform 105. The data platform 105 may access an identity graph of consumers (e.g., a set of consumers each having some associated data stored in the privacy protection environment 110) that may include associated data and/or characteristics stored in the privacy protection environment 110 (e.g., a cleanroom to which the data platform 105 may have at least some degree of access), and the data platform 105 may identify a target group based on the desired target group in view of the set of consumers. An example identity graph 200 is illustrated in FIG. 2, and described herein.

The privacy protection environment 110 may attempt to protect personally identifiable information by establishing one or more contractual agreements between parties sharing data, such as the data platform 105, the advertising entity 115, and/or one or more digital publishers 120. In some instances, the data platform 105 may be operable to manage a controlled space where the data may be shared, and/or in instances in which persons associated with the data platform 105 have access to the shared data, the persons may be siloed from one another to reduce potential leakage of the data by the data platform 105. In some instances, the privacy protection environment 110 may include multilayer redundancies to reduce potential leakage of the data by the data platform 105, which may include the siloed persons as described, reducing and/or limiting access to raw data by any one entity, one or more confirmations of output data from the privacy protection environment 110 to ensure the output data may be aggregated (which may result in additional layers of privacy associated with the data in the data platform 105.

In some instances, the privacy protection environment 110 may be a cleanroom configured to act as a shared data space with restricted access. A data cleanroom may refer to an environment where some or all data may be anonymized, aggregated, processed, and/or stored to be made available for measurement, and/or data transformations in a privacy-focused way. For example, two digital publishers 120 may desire to share their respective data corpora with one another. The two digital publishers 120 may then enter into a contract or agreement to share data. Responsive to receiving a request from both digital publishers 120 to create or join a data cleanroom, the data cleanroom may be created and used by the digital publishers 120. The data cleanroom may be accessed using one or more of a service account and/or an encryption key. The data cleanroom may include some or all of the respective data corpora from both of the digital publishers 120. Access to the data cleanroom may be restricted in any manner. In some examples, the access may be restricted using the service account. A service account may refer to a specific account that has been created for the purpose of accessing a particular shared data space. Additionally or alternatively, access to the cleanroom may be restricted using the encryption key. The encryption key, for example, may limit access only to those digital publishers 120 that have entered into a contract with one another, and may be generated using any method of encryption for encrypting data. Further, an encryption key may only provide one-way access to the digital publishers that have access to the key. The digital publishers 120 that have an encryption key and access to the cleanroom may desire to have additional digital publishers 120 and their data corpora joined to the cleanroom. In such a scenario, a third digital publisher of the digital publishers 120 may be provided an encryption key that grants access to the cleanroom already created by the first two digital publishers 120. In some instances, the encryption key may be shared after permission is given by all digital publishers 120 that currently have access to the encryption key.

In some instances, the data platform 105 may generate and/or maintain an identity graph (e.g., the identity graph 200 of FIG. 2) that may include various consumption and/or household data associated with one or more consumers, as described herein. In some instances, the data platform 105 may include linear data and/or advertiser data and the data platform 105 may be operable to transmit the linear data and/or the advertiser data to the privacy protection environment 110 (e.g., the cleanroom). In some instances, the data platform 105 may be operable to resolve obtained impressions to particular households, and the data platform 105 may be configured to transmit results of an advertising campaign to the advertising entity 115.

In some instances, the digital publishers 120 may individually contribute data to the privacy protection environment 110. In some instances, the digital publishers 120 may share the data with one another via the privacy protection environment 110, as described herein. In such instances, the digital publishers 120 may enter into contracts and/or agreements regard the detail of the data sharing, standardization of data metrics (e.g., what constitutes an impression may be uniform for the digital publishers 120 relative to the data in the privacy protection environment 110), and/or other details shared between the digital publishers 120.

In some instances, the privacy protection environment 110 may be operable to obtain and/or store the data from the digital publishers 120 and may aggregate the data from the digital publishers 120. In some instances, the privacy protection environment 110 may aggregate the data from the digital publishers 120 using code preapproved by the digital publishers 120 in advance of transmitting the data to the privacy protection environment 110. In some instances, the digital publishers 120 and/or the data platform 105 may have visibility to the raw data included in the privacy protection environment 110. The privacy protection environment 110 may be operable to limit data output therefrom to be aggregated data, such that the output data may maintain privacy protection relative to the raw data that may be stored within the privacy protection environment 110.

In some instances, the digital publishers 120 may individually obtain a targetable universe of consumers and provide the targetable universe of consumers to the privacy protection environment 110. The targetable universe of consumers may be determined using data obtained from the digital publishers 120. For example, a first portion of the targetable universe of consumers may be provided by a video streaming company, a second portion of the targetable universe of consumers may be provided by a search engine company, a third portion of the targetable universe of consumers may be provided by web-based auction company, and so forth.

In some instances, the advertising entity 115 may prepare a desired target audience for an advertising campaign, which desired target audience may include one or more consumers having at least one common characteristic shared between the consumers. For example, the common characteristics may include age (e.g., age range), gender, income range, location (e.g., geographic location), historical purchase history, number of persons in a household, digital media consumption preferences, entertainment preferences, and/or any other characteristics that may be measured and/or shared between consumers. In some instances, the desired target audience may individually include an identifier that may be used to identify individual targets in the desired target audience and/or the targetable universe of consumers. The identifier may include one or more of an internet protocol (IP) address, a medium access control (MAC) address, an email address, a hashed email address (HEM), and/or other methods of digital identification.

In some instances, the advertising entity 115 may provide the desired target audience to the data platform 105. The desired target audience may be provided to the data platform 105 via the one or more characteristics associated with the desired target audience. For example, the advertising entity 115 may identify one or more of the common characteristics, one or more identifiers, and/or other methods of identification of the desired target audience, and the advertising entity 115 may communicate the desired target audience (e.g., the one or more methods of identification) to the data platform 105.

In some instances, the data platform 105 may obtain the desired target audience and/or the one or more characteristics associated with the desired target audience, and the data platform 105 may be operable to perform an update to an audience identity included therein in view of the one or more characteristics associated with the desired target audience. For example, the data platform 105 may include data associated with an individual audience member (e.g., that may be included in the desired target audience, the targetable universe of consumers, and/or included in a known audience - where known may be relative to the data platform 105) and the one or more characteristics associated with the desired target audience may be used to update the data associated with one or more of the individual audience members.

In some instances, updating the data associated with the one or more individual audience members (e.g., that may be updated within the data platform 105) may be performed by identifying individual audience members within the desired target audience and performing the update to a corresponding audience member within the known audience. For example, the updating may be performed by matching the identifier associated with a particular audience member to the identifier associated with the particular audience member in the known audience, as described herein (e.g., IP address, MAC address, an email address, and so forth). Alternatively, or additionally, in instances in which the data platform 105 does not include a particular audience member in the desired target audience (e.g., based on matching the identifier), the data platform 105 may add the particular audience member (and associated characteristics) to the known audience.

In these and other instances, the data platform 105 may be operable to generate at least one advertising target based on the desired target audience. For example, upon receiving the desired target audience, the data platform 105 may utilize the one or more characteristics to generate at least one advertising target based on the one or more characteristics, and the data platform 105 may include one or more audience members (that may be included in the desired target audience and/or the known audience) in the at least one advertising target based on matching commonalities in the one or more characteristics. In such instances, an identifier may be added to the at least one advertising target to identify the audience members included in the at least one advertising target, where the identifier may be associated with a household of the audience members and/or a device of the audience members.

In some instances, the desired target audience and/or the associated one or more characteristics may be used as training data, and may be provided to a model (e.g., a machine learning model for a machine learning system) to be trained. For example, the one or more characteristics of the desired target audience that may be associated with a particular audience may be provided as input to a model to train the model, such that the model may be operable to identify other audience members that may not include the one or more characteristics associated with the desired target audience, but may include analogous characteristics that the model may use to identify additional audience members to be included in the desired target audience.

The data platform 105 may be operable to communicate with the privacy protection environment 110 (e.g., the data platform 105 may be a service account and/or may hold an encryption key for use in a cleanroom). Alternatively, or additionally, the data platform 105 may have access to and/or may cause an identity graph 200 of FIG. 2, or an identity spine, to be generated within, or for use by, the privacy protection environment 110. The identity graph/identity spine 200 (herein referred to as identity graph 200 unless explicitly stated otherwise) in the privacy protection environment 110 may include one or more identifiers 212 (e.g., individually associated with consumers, such as a first consumer 210, a second consumer 220, and/or an nth consumer 230), characteristics 214 associated therewith, and/or may have personally identifiable information removed therefrom. In some instances, the identity graph 200 may include a combination of the identifiers 212 and/or the characteristics 214 combined with household information 216 associated with any particular consumer (such as the first consumer 210, the second consumer 220, and/or the nth consumer 230). For example, the first consumer 210 and the second consumer 220 may each have unique identifiers 212 and/or characteristics 214, and the first consumer 210 and the second consumer 212 may be located in the same household, and the identity graph may store the household information 216 relative to the first consumer 210 and the second consumer 220. In these and other instances, the identity graph 200 may be generated from the targetable universe of consumers 240 obtained from the one or more digital publishers, as described herein.

In some instances, the identity graph 200 may be constructed using data from various and/or different identity providers, where the identity providers may be the digital publishers 120. In some instances, the identity graph 200 may be used to associate various viewing events to one or more consumers (e.g., of the first consumer 210, the second consumer 220, and/or the nth consumer 230) using the identifiers 212 and/or the characteristics 214. In some instances, the association between the viewing events and the consumers may occur over different identity spaces and/or different platforms (e.g., a first streaming service, a second streaming service, and an over-the-air broadcast). In some instances, the association of the between the viewing events and the consumers may be used to estimate audience metrics, such as described herein. For example, in instances in which a particular consumer uses a first login to a first streaming service, a second login to a second streaming service, and a third login to a cable subscription, the data platform 105 may be operable to update the identity graph 200 for the particular consumer, such that viewing on the first streaming service, the second streaming service, and/or the cable subscription may be linked to the particular consumer (e.g., using shared email addresses, matching postal addresses, etc.) and impressions (or similar data capture) may be more accurately represented by the data platform 105 relative to impressions associated with logins alone.

In some instances, the identity graph 200 may be generated prior to access by the data platform 105, such that in instances in which the data platform 105 accesses the privacy protection environment 110, the identity graph 200 may be available for use. Alternatively, or additionally, the data platform 105 may cause the identity graph 200 to be generated and/or updated in the privacy protection environment 110. For example, a user of the data platform 105 may submit an input to the privacy protection environment 110 to generate and/or update the identity graph 200, and the identity graph 200 may be generated and/or updated, respectively. Alternatively, or additionally, the identity graph 200 may be automatically updated in response to new identifiers 212, changes to existing identifiers 212, new characteristics 214, changes to existing characteristics 214, new or changed household information 216, new consumers (e.g., the nth consumer 230) added thereto, changes to existing consumers included in the identity graph 200, and/or other changes to other data included in the identity graph 200. In such instances, the privacy protection environment 110 may include a tunable parameter that may be used as a threshold for updating the identity graph 200. For example, a change to an existing identifier 212 associated with a consumer may not satisfy a threshold associated with the tunable parameter for updating the identity graph 200, and an addition of a new identifier 212 associated with the consumer may satisfy the threshold associated with the tunable parameter such that the identity graph 200 may be automatically updated. In such instances, a user or moderator of the privacy protection environment 110 may establish and/or adjust the tunable parameter.

The data platform 105 may transmit the desired target audience 235 obtained from the advertising entity 115 to the privacy protection environment 110 and/or the identity graph 200 to determine one or more particular advertising targets for the advertising campaign based on the desired target audience 235 and in view of the targetable universe of consumers 240. In some instances, the data platform 105 may include one or more identifiers with the desired target audience 235, where the one or more identifiers may be provided in view of a request from the one or more digital publishers 120. For example, a first digital publisher may use device ID identifiers to transmit an advertising campaign and a second digital publisher may use hashed email identifiers to transmit an advertising campaign. In both examples, the data platform 105 may provide an identifier associated with the desired target audience and corresponding to the identifiers utilized by the one or more digital publishers 120 to the privacy protection environment 110, as described herein.

Within the privacy protection environment 110, the desired target audience 235 may be pre-verified by the data platform 105 with one or more consumers in the targetable universe of consumers 240 to determine advertising targets for an advertising campaign of the advertising entity 115. The pre-verification may be performed using at least the characteristics associated with the consumers in the targetable universe of consumers 240 and the desired target audience 235. In some instances, the pre-verification between the desired target audience 235 and the one or more consumers in the targetable universe of consumers 240 may be performed by the data platform 105 identifying matches of one or more identifiers associated with the desired target audience 235 and the targetable universe of consumers 240. For example, a first identifier associated with a first consumer included in the desired target audience 235 may be the same or similar as a first identifier associated with a second consumer included in the targetable universe of consumers 240 and it may be determined by the data platform 105 that a match exists between the first consumer (in the desired target audience 235) and the second consumer (in the targetable universe of consumers 240).

In these and other instances, determining a match between one or more identifiers associated with the desired target audience 235 and the targetable universe of consumers 240 via the identity graph 200 may include identifying a number of matching characteristics to satisfy a threshold number of matched characteristics. The threshold number of matched characteristics may be used to confirm whether an element in the desired target audience 235 (e.g., a target consumer in a desired target group) may be a match to an element in the targetable universe of consumers 240 (e.g., a known consumer having data associated therewith), such that the target consumer may be pre-verified by the data platform. For example, in instances in which a threshold number of matched characteristics is determined to be three, identifying two matching characteristics (e.g., consumer age and consumer income) between one or more identifiers 212 associated with the desired target audience 235 and the targetable universe of consumers 240 via the identity graph 200 may not result in a match, whereas identifying three matching characteristics (e.g., consumer age, consumer income, and consumer location) between one or more identifiers 212 associated with the desired target audience 235 and the targetable universe of consumers 240 via the identity graph 200 may result in a match. In these and other instances, the threshold number of matched characteristics may be varied or tuned as needed to improve accuracy and/or performance of the operations described herein.

In some instances, the pre-verification operation by the data platform 105 may be used to determine a ratio of the identified advertising targets relative to the desired target audience 235. The ratio may be used to determine if the advertising campaign may be executed. For example, in instances in which the ratio fails to satisfy a threshold ratio, the advertising campaign of the advertising entity 115 may not be executed. Alternatively, in instances in which the ratio satisfies the threshold ratio, the advertising campaign of the advertising entity 115 may be activated for the advertising targets. In some instances, the threshold ratio may be provided to the data platform 105 by the advertising entity 115 to establish a desired amount of targets to be reached by the advertising campaign. For example, the advertising entity 115 may establish the threshold ratio to be at least 80% and in instances in which the identified ratio is greater than or equal to 80%, the data platform 105 may direct the one or more digital publishers 120 to activate the advertising campaign against the advertising targets.

In response to determining one or more advertising targets for the advertising campaign of the advertising entity 115, the advertising targets and/or the identifiers associated with the advertising targets may be transmitted from the privacy protection environment 110 to the one or more digital publishers 120 for the advertising campaign to be activated for the advertising targets. As part of the advertising campaign, the one or more digital publishers 120 may obtain impression results 245 associated with the advertising campaign relative to the advertising targets. The impression results 245 may be a quantification of the total number of impressions upon the advertising targets during the advertising campaign. The impression results 245 may be separated into one or more dimensions (e.g., dimensions that may be established by the one or more digital publishers 120 and/or the advertising entity 115) to be provided to at least the one or more digital publishers 120 and/or the advertising entity 115. Alternatively, or additionally, the privacy protection environment 110 may obtain the impression results 245 from the one or more digital publishers 120. For example, the one or more digital publishers 120 may transmit the impression results 245 to the privacy protection environment 110 (and/or to the identity graph 200) as the impression results 245 are obtained and/or the impression results 245 may be transmitted to the privacy protection environment 110 at a conclusion of the advertising campaign.

In some instances, the impression results 245 may be transmitted to the one or more digital publishers 120, the advertising entity 115, and/or the privacy protection environment 110 at a conclusion of the advertising campaign. For example, after the advertising campaign has concluded, the impression results 245 may be obtained and/or distributed. Alternatively, or additionally, the impression results 245 may be updated and/or distributed during the advertising campaign, such as periodically throughout the advertising campaign. For example, the impression results 245 may be distributed on a periodic schedule, such as monthly, daily, hourly, by minute, by second, substantially real time, and/or any other repeating period of time. Alternatively, or additionally, the impression results 245 may be updated and/or distributed in response to a satisfaction of a threshold. For example, in response to a threshold number of impressions being satisfied, the impression results 245 may be updated and/or distributed (e.g., whether the advertising campaign is currently running or completed) and the threshold may be determined and/or adjusted by a user, such as a user associated with the advertising entity 115 and/or the one or more digital publishers 120.

Within the privacy protection environment 110, the impression results 245 may be matched to individual consumers using the identity graph 200 located in the privacy protection environment 110. Alternatively, or additionally, the impression results 245 and/or the subsequent matching to consumers, may be aggregated into aggregated data 250. In some instances, the privacy protection environment 110 may be operable to obtain the aggregated data 250 from the identity graph 200. The data platform 105 may obtain the aggregated data 250 (e.g., aggregated impression results) and/or associated matching to the consumers from the privacy protection environment 110 and the data platform 105 may determine a scorecard for the impression results 245 relative to the desired target audience. The data platform 105 may communicate the scorecard to the advertising entity 115 to notify and/or confirm a level of success of an advertising campaign, based on the impression results relative to the desired target audience, as indicated by the scorecard.

In some instances, the scorecard may include a set of metrics that may be used to measure a performance of the advertising campaign relative to the desired target audience. The scorecard may include at least a metric associated with measuring a quality of translation from the desired target audience to the targetable universe of consumers. Alternatively, or additionally, the scorecard may include a measure of a quantity of impressions delivered by the advertising campaign, which may include a target rate. The target rate may be a measure of the impressions on the desired target audience. The scorecard may include additional metrics, that may include, but not be limited to, reach associated with the target rate, percent of advertising campaign reach relative to the desired target audience, audience coverage, estimated size of the targetable universe of consumers, and/or other metrics that may be associated with the advertising campaign and/or the performance thereof.

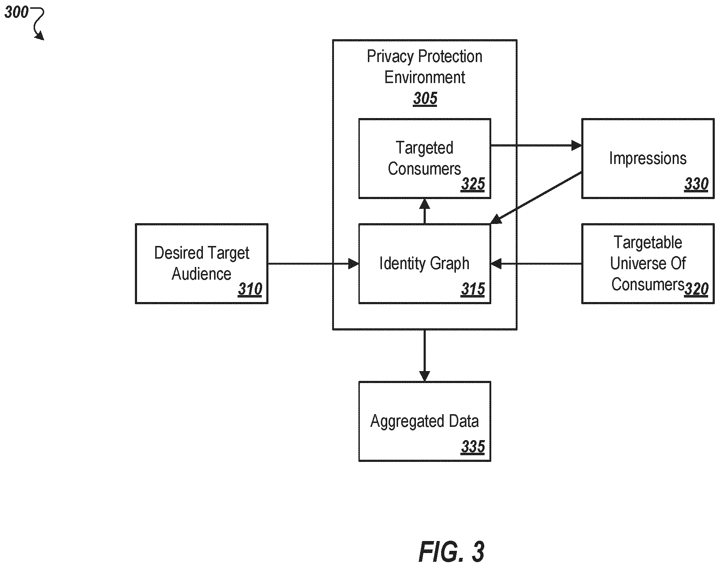

In an example as illustrated in FIG. 3 (and combined with the system 100 of FIG. 1), an advertising entity 115 may identify a desired target audience 310 for an advertising campaign. The advertising entity 115 may submit the desired target audience 310 to a data platform 105. The data platform 105 may have access to an identity graph 315, based on previously obtained data associated with one or more consumers. The data platform 105 may transmit the desired target audience 310 to a privacy protection environment 305 (or privacy protection environment 110 of FIG. 1), such as a cleanroom, where the desired target audience 310 may be used for targeting and/or measurement, associated with the advertising campaign.

Within the privacy protection environment 305, the desired target audience 310 may be matched with one or more consumers based on the identity graph 315 from the data platform 105, based on identifying a number of matching characteristics to satisfy a threshold number of characteristics. Alternatively, or additionally, digital publishers 120 may be operable to individually transmit a targetable universe of consumers 320 to the privacy protection environment 110 such that a pre-verification operation may occur between the desired target audience 310 and the targetable universe of consumers 320.

Upon matching (e.g., using the pre-verification data) the desired target audience 310 to targeted consumers 325 in the targetable universe of consumers 320, the privacy protection environment 305 may provide the targeted consumers 325 to the digital publishers 120 for advertisements associated with the advertising campaign to be distributed to the targeted consumers 325. In response to the advertisements being distributed, the digital publishers 120 may obtain impressions 330 associated with the viewing of the advertisements by the targeted consumers 325. Alternatively, or additionally, the impressions 330, and/or data associated with the impressions 330 (e.g., consumer linked data), obtained by the digital publishers 120 may be transmitted to the privacy protection environment 305.

The privacy protection environment 305 may be operable to determine matches between the impressions 330 and the identity graph 315. The privacy protection environment 305 may be operable to generate aggregated data 335 including the impressions 330 matched to the desired target audience 310 and/or the targetable universe of consumers 320, and the privacy protection environment 305 may output the aggregated data 335 to the data platform 105. The data platform 105 may report the results of the advertising campaign, which may include the aggregated (impression) data 335 from the privacy protection environment 305, to the advertising entity 115. In some instances, the data platform 105 may generate a scorecard to illustrate and/or describe the results of the advertising campaign.

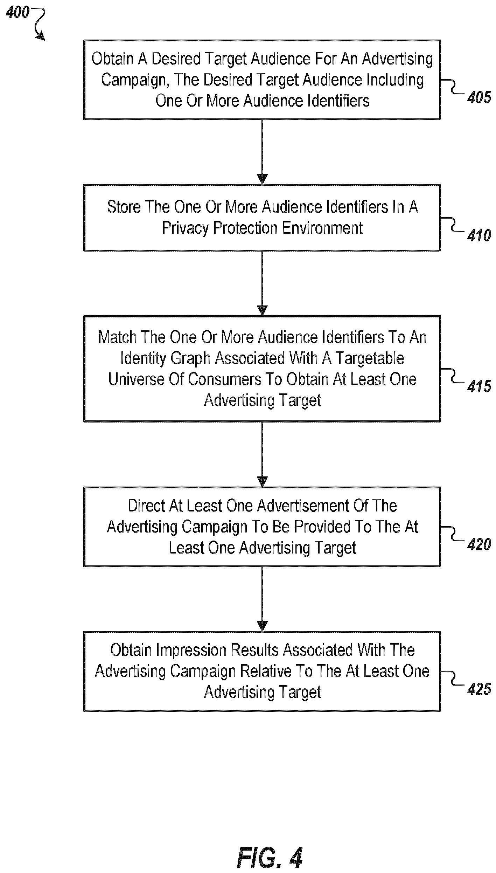

FIG. 4 illustrates a flowchart of an example method for audience matching. The method 200 may be performed by processing logic that may include hardware (circuitry, dedicated logic, etc.), software (such as is run on a general purpose computer system or a dedicated machine), or a combination of both, which processing logic may be included in any computer system or device, such as the data platform 105 of FIG. 1.

For simplicity of explanation, methods described herein are depicted and described as a series of acts. However, acts in accordance with this disclosure may occur in various orders and/or concurrently, and with other acts not presented and described herein. Further, not all illustrated acts may be used to implement the methods in accordance with the disclosed subject matter. In addition, those skilled in the art will understand and appreciate that the methods may alternatively be represented as a series of interrelated states via a state diagram or events. Additionally, the methods disclosed in this specification may be capable of being stored on an article of manufacture, such as a non-transitory computer-readable medium, to facilitate transporting and transferring such methods to computing devices. The term article of manufacture, as used herein, is intended to encompass a computer program accessible from any computer-readable device or storage media. Although illustrated as discrete blocks, various blocks may be divided into additional blocks, combined into fewer blocks, or eliminated, depending on the desired implementation.

At block 405, a desired target audience for an advertising campaign may be obtained. The desired target audience may include one or more audience identifiers. In some instances, the one or more audience identifiers may include one or more privacy sensitive characteristics that may be used to identify individual targets in the desired target audience.

In some instances, the desired target audience may be obtained from an advertising entity. In some instances, the desired target audience may correspond to an audience the advertising entity is targeting. In some instances, the desired target audience may include one or more target characteristics that may correspond to an advertising campaign of the advertising entity.

At block 410, the one or more audience identifiers may be stored in a privacy protection environment. In some instances, the privacy protection environment may be a cleanroom. In some instances, the cleanroom may include an approval from a data accessor and/or an approval from a data provider, and the cleanroom may be monitored by a data platform. In these and other instances, the cleanroom may be operable to output aggregated data.

In some instances, the privacy protection environment may include a contractual agreement between a data accessor, a data provider, and/or a data platform. In some instances, the data platform may include multi-layer redundancies to reduce a likelihood of leakage of the one or more audience identifiers.

At block 415, the one or more audience identifiers may be matched to an identity graph associated with a targetable universe of consumers to obtain at least one advertising target. In some instances, the identity graph may include one or more characteristics that may be individually associated with consumers in the targetable universe of consumers. Alternatively, or additionally, the identity graph may include a corresponding consumer identifier. In some instances, a match between the one or more audience identifiers and the identity graph may include identifying a number of matching characteristics to satisfy a threshold number of characteristics.

At block 420, at least one advertisement of the advertising campaign may be directed to be provided to the at least one advertising target.

At block 425, impression results associated with the advertising campaign relative to the at least one advertising target may be obtained.

Modifications, additions, or omissions may be made to the method 400 as described without departing from the scope of the present disclosure. For example, a scorecard may be generated based on the impression results and/or the desired target audience. In another example, the designations of different elements in the manner described is meant to help explain concepts described herein and is not limiting. Further, the method 400 may include any number of other elements or may be implemented within other systems or contexts than those described.

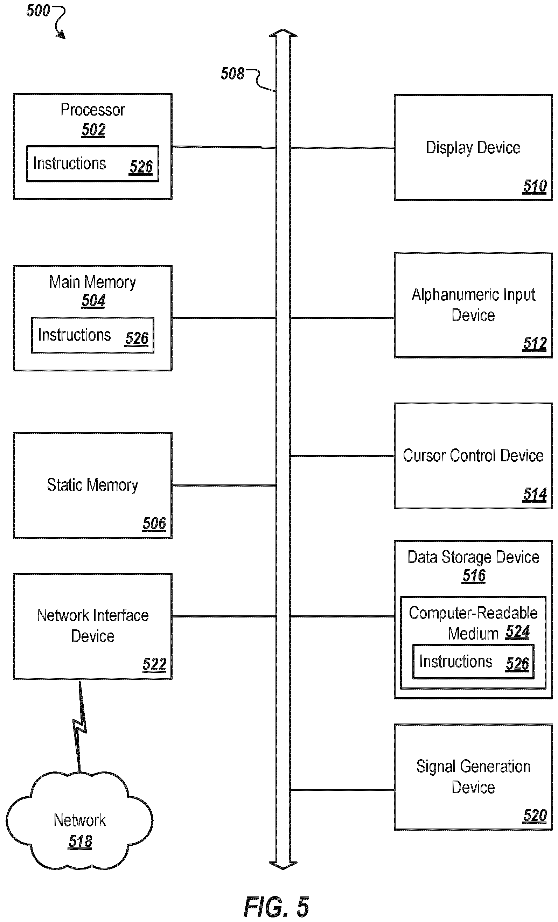

FIG. 5 illustrates an example computing device 500 within which a set of instructions for causing the machine to perform any one or more of the methods discussed herein may be executed. The computing device 500 may include a mobile phone, a smart phone, a netbook computer, a rackmount server, a router computer, a server computer, a personal computer, a mainframe computer, a laptop computer, a tablet computer, a desktop computer, or any computing device with at least one processor, etc., within which a set of instructions for causing the machine to perform any one or more of the methods discussed herein may be executed. In alternative implementations, the machine may be connected (e.g., networked) to other machines in a LAN, an intranet, an extranet, or the Internet. The machine may operate in the capacity of a server machine in client-server network environment. The machine may include a personal computer (PC), a set-top box (STB), a server, a network router, switch or bridge, or any machine capable of executing a set of instructions (sequential or otherwise) that specify actions to be taken by that machine. Further, while only a single machine is illustrated, the term "machine" may also include any collection of machines that individually or jointly execute a set (or multiple sets) of instructions to perform any one or more of the methods discussed herein.

The computing device 500 can include a processing device 502 (e.g., a processor), a main memory 504 (e.g., read-only memory (ROM), flash memory, dynamic random access memory (DRAM) such as synchronous DRAM (SDRAM)), a static memory 506 (e.g., flash memory, static random access memory (SRAM)) and a data storage device 516, which communicate with each other via a bus 508.

The processing device 502 represents one or more general-purpose processing devices such as a microprocessor, central processing unit, or the like. More particularly, the processing device 502 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processing device 502 may also include one or more special-purpose processing devices such as an application specific integrated circuit (ASIC), a field programmable gate array (FPGA), a digital signal processor (DSP), network processor, or the like. The processing device 502 is configured to execute instructions 526 for performing the operations and steps discussed herein.

The computing device 500 may further include a network interface device 522 which may communicate with a network 518. The computing device 500 also may include a display device 510 (e.g., a liquid crystal display (LCD) or a cathode ray tube (CRT)), an alphanumeric input device 512 (e.g., a keyboard), a cursor control device 514 (e.g., a mouse) and a signal generation device 520 (e.g., a speaker). In at least one implementation, the display device 510, the alphanumeric input device 512, and the cursor control device 514 may be combined into a single component or device (e.g., an LCD touch screen).

The data storage device 516 may include a computer-readable storage medium 524 on which is stored one or more sets of instructions 526 embodying any one or more of the methods or functions described herein. The instructions 526 may also reside, completely or at least partially, within the main memory 504 and/or within the processing device 502 during execution thereof by the computing device 500, the main memory 504 and the processing device 502 also constituting computer-readable media. The instructions may further be transmitted or received over a network 518 via the network interface device 522.

While the computer-readable storage medium 524 is shown in an example implementation to be a single medium, the term "computer-readable storage medium" may include a single medium or multiple media (e.g., a centralized or distributed database and/or associated caches and servers) that store the one or more sets of instructions. The term "computer-readable storage medium" may also include any medium that is capable of storing, encoding, or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media.

A number of implementations have been described. Nevertheless, it will be understood that various modifications may be made without departing from the spirit and scope of the disclosure. Accordingly, other implementations are within the scope of the following claims.

In accordance with common practice, the various features illustrated in the drawings may not be drawn to scale. The illustrations presented in the present disclosure are not meant to be actual views of any particular apparatus (e.g., device, system, etc.) or method, but are merely idealized representations that are employed to describe various embodiments of the disclosure. Accordingly, the dimensions of the various features may be arbitrarily expanded or reduced for clarity. In addition, some of the drawings may be simplified for clarity. Thus, the drawings may not depict all of the components of a given apparatus (e.g., device) or all operations of a particular method.

Terms used herein and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, it is understood that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

Additionally, the use of the terms "first," "second," "third," etc., are not necessarily used herein to connote a specific order or number of elements. Generally, the terms "first," "second," "third," etc., are used to distinguish between different elements as generic identifiers. Absence a showing that the terms "first," "second," "third," etc., connote a specific order, these terms should not be understood to connote a specific order. Furthermore, absence a showing that the terms first," "second," "third," etc., connote a specific number of elements, these terms should not be understood to connote a specific number of elements. For example, a first widget may be described as having a first side and a second widget may be described as having a second side. The use of the term "second side" with respect to the second widget may be to distinguish such side of the second widget from the "first side" of the first widget and not to connote that the second widget has two sides.

All examples and conditional language recited herein are intended for pedagogical objects to aid the reader in understanding the invention and the concepts contributed by the inventor to furthering the art, and are to be construed as being without limitation to such specifically recited examples and conditions. Although embodiments of the present disclosure have been described in detail, it should be understood that the various changes, substitutions, and alterations could be made hereto without departing from the spirit and scope of the present disclosure.

## Claims

1. A method comprising:
obtaining a target audience for an advertising campaign, the target audience comprising one or more audience identifiers;
storing the one or more audience identifiers in a privacy protection environment;
matching the one or more audience identifiers to an identity graph associated with a targetable universe of consumers to obtain at least one advertising target;
directing at least one advertisement of the advertising campaign to be provided to the at least one advertising target; and
obtaining impression results associated with the advertising campaign relative to the at least one advertising target.

2. The method of claim 1, further comprising generating a scorecard based on the impression results and the target audience.

3. The method of claim 1, wherein the target audience is obtained from an advertising entity and corresponds to an audience the advertising entity is targeting.

4. The method of claim 1, wherein the target audience comprises one or more target characteristics corresponding to an advertising campaign of an advertising entity.

5. The method of claim 1, wherein the one or more audience identifiers include one or more privacy sensitive characteristics that are used to identify individual targets in the target audience.

6. The method of claim 1, wherein the privacy protection environment is a cleanroom.

7. The method of claim 6, wherein the cleanroom comprises an approval from a data accessor and an approval from a data provider, and the cleanroom is monitored by a data platform.

8. The method of claim 6, wherein the cleanroom is configured to output aggregated data.

9. The method of claim 1, wherein the privacy protection environment comprises a contractual agreement between a data accessor, a data provider, and a data platform.

10. The method of claim 9, wherein the data platform comprises multi-layer redundancies to reduce a likelihood of leakage of the one or more audience identifiers.

11. The method of claim 1, wherein the identity graph comprises one or more characteristics individually associated with consumers in the targetable universe of consumers and a corresponding consumer identifier.

12. The method of claim 1, wherein a match between the one or more audience identifiers and the identity graph comprises identifying a number of matching characteristics to satisfy a threshold number of matched characteristics.

13. A system comprising:
a privacy protection environment; and
a data platform, operable to:
obtain a target audience for an advertising campaign, the target audience comprising one or more audience identifiers;
store the one or more audience identifiers in the privacy protection environment;
match the one or more audience identifiers to an identity graph associated with a targetable universe of consumers to obtain at least one advertising target;
direct at least one advertisement of the advertising campaign to be provided to the at least one advertising target; and
obtain impression results associated with the advertising campaign relative to the at least one advertising target.

14. The system of claim 13, wherein the data platform is further operable to generate a scorecard based on the impression results and the target audience.

15. The system of claim 13, wherein the target audience:
is obtained from an advertising entity;
corresponds to an audience the advertising entity is targeting; and
comprises one or more target characteristics corresponding to an advertising campaign of an advertising entity.

16. The system of claim 13, wherein the one or more audience identifiers include one or more privacy sensitive characteristics that are used to identify individual targets in the target audience.

17. The system of claim 13, wherein the privacy protection environment is a cleanroom.

18. The system of claim 17, wherein the cleanroom comprises an approval from a data accessor and an approval from a data provider, the cleanroom is monitored by a data platform, and the cleanroom is configured to output aggregated data.

19. The system of claim 13, wherein the identity graph comprises one or more characteristics individually associated with consumers in the targetable universe of consumers and a corresponding consumer identifier.

20. The system of claim 13, wherein a match between the one or more audience identifiers and the identity graph comprises identifying a number of matching characteristics to satisfy a threshold number of matched characteristics.
